# EUROPÄISCHE PATENTSCHRIFT

(11) **EP 1 706 188 B1**
(45) Veröffentlichungstag und Bekanntmachung des Hinweises auf die Patenterteilung: **06.02.2008**
(21) Anmeldenummer: 04765695.4
(22) Anmeldetag: 29.09.2004
(51) Int. Cl.: B01D 1/30, F01K 17/04, C02F 1/06

(54) **VERFAHREN UND VORRICHTUNG ZUR BEHANDLUNG VON VERUNREINIGTEM WASSER**
METHOD AND DEVICE FOR TREATING CONTAMINATED WATER
PROCEDE ET DISPOSITIF DE TRAITEMENT D'EAU NON EPUREE

(30) Priorität: 20.01.2004 EP 04001043
(43) Veröffentlichungstag der Anmeldung: 04.10.2006
(73) Patentinhaber: SIEMENS AKTIENGESELLSCHAFT, 80333 München (DE)
(72) Erfinder: SCHÖTTLER, Michael, 91052 Erlangen (DE); WALLMANN, Anja, 91056 Erlangen (DE); WULFF, Rainer, 91224 Pommelsbrunn (DE)
(86) Internationale Anmeldenummer: PCT/EP2004/010899
(87) Internationale Veröffentlichungsnummer: WO 2005/068038

(56) Entgegenhaltungen:
- US-A- 5 671 601

## Beschreibung

Die vorliegende Erfindung betrifft ein Verfahren und eine Vorrichtung zur Behandlung von verunreinigtem Wasser bei einer Dampfkraftanlage. Die vorliegende Erfindung betrifft weiterhin eine Dampfkraftanlage.

Eine solche Dampfkraftanlage enthält üblicherweise mehrere Dampftrommeln, mit denen in unterschiedlichen Druckniveaus Dampf erzeugt wird, der insbesondere einer Dampfturbine zugeführt werden kann. Verunreinigungen im Wasser-Dampf-Kreislauf der Dampfkraftanlage müssen entfernt werden. Eine Aufkonzentration der Verunreinigungen erfolgt in der jeweiligen Dampftrommel. Aufgrund der Entnahme von Sattdampf aus den Dampftrommeln verbleiben nicht-flüchtige Substanzen in den Dampftrommeln. Diese nicht-flüchtigen Substanzen werden durch Abschlämmen aus dem Kreislauf entfernt. Dabei gehen dem Kreislauf Energie und Wasser verloren, das durch Zusatzwasser, sogenanntes Deionat, wieder zugeführt werden muss. Dadurch entstehen Kosten. Des Weiteren wird die Umwelt belastet.

Um die energetischen Verluste gering zu halten, wurde bereits vorgeschlagen, das Abschlämmwasser aus der Dampftrommel hohen Druckniveaus in die Dampftrommel niedrigeren Druckniveaus weiterzuleiten, in der es entspannen kann (sogenanntes Boiler Cascading Blowdown). Ein Teil der Energie des zusätzlich eingeleiteten Abschlämmwassers kann dann durch Ausdampfen und Weiterleiten des gewonnenen Dampfes an die Dampfturbine in Leistung umgesetzt werden. Nachteilig ist dabei allerdings, dass sämtliche Verunreinigungen von einem Druckniveau zum nachfolgenden weitergegeben werden.

Aus dem Dokument US-A-5 671 601 A (Bronicki L. et al.) ist ein Dampfkraftwerk bekannt, in dem einzelne, unter abnehmendem Druck stehende Dampfkessel über Wasser-Dampf-Trenneinrichtungen verbunden sind. Die kondensierte Flüssigkeit aus den Dampfkesseln wird über Abflussleitungen gesammelt und aus dem Verfahren ausgeschieden.

Aus dem Dokument EP-A-0 995 948 (Asea Brown Boveri; Alstom) ist ein Dampfkraftwerk bekannt, in dem einzelne, unter abnehmendem Druck stehende Dampferzeuger über Wasser-Dampf- Trenneinrichtungen verbunden sind. Das thermisch gesättigte Wasser aus einem Dampftrommel wird über Abflussleitungen zu dem MD-Dampftrommel mit dem niedrigeren Druck zugeführt. Bei jeder Dampf-Wasser-Trennung zwischen zwei Dampferzeuger wird abgeschlämmtes Wasser abgezogen.

Es ist weiterhin bekannt, dass bei der Dampftrommel eines einzelnen Druckniveaus das abgeschlämmte Wasser in einem Abscheiderbehälter entspannt und Wasser und Dampf voneinander getrennt werden. Der Dampf wird anschließend bei niedrigem Druck in einen Sammeltank zur Entgasung und zur Aufwärmung von darin enthaltenem Wasser weiter geleitet.

Der Erfindung liegt die Aufgabe zugrunde, auf technisch einfache und effektive Weise ein Reinigen von verunreinigtem Wasser bei einer Dampfkraftanlage mit mehreren Druckniveaus zu ermöglichen.

Diese Aufgabe ist erfindungsgemäß mit einem Verfahren und einer Vorrichtung zur Behandlung von verunreinigtem Wasser bei einer Dampfkraftanlage gemäß Anspruch 1 gelöst. Die Aufgabe ist ebenfalls mit einer Dampfkraftanlage gelöst, die eine erfindungsgemäße Vorrichtung aufweist. Mit der vorliegenden Erfindung kann die Häufigkeit des Abschlämmens gegenüber dem Stand der Technik reduziert werden. Des Weiteren können die Menge von zu entsorgendem Abschlämmwasser sowie der Verbrauch von zuzuführendem Deionat gering gehalten werden.

Bei einer vorteilhaften Weiterbildung der Erfindung wird bei der Wasser-Dampf-Trennung abgetrenntes, verunreinigtes Wasser einem Sammeltank zur weiteren Aufbereitung zugeführt. Damit wird das von mehreren Dampftrommeln abgeführte Abschlämmwasser zentral gesammelt und nachfolgend aufbereitet. Das Volumen des Sammeltanks kann klein gehalten werden.

Gemäß Anspruch 1 wird bei der Wasser-Dampf-Trennung abgetrennter Dampf der zweiten Dampftrommel zugeführt. Dies ermöglicht eine besonders gute Energieausnutzung, was letztendlich zu einer Erhöhung der von der Dampfkraftanlage erzeugbaren Leistung führt.

In einer vorteilhaften Ausgestaltung der Erfindung findet zusätzlich zwischen einer dritten Dampftrommel eines dritten Druckniveaus, das höher ist, als das erste Druckniveau, und der zweiten Dampftrommel die Wasser-Dampf-Trennung statt. Dadurch kann das Abschlämmen noch effektiver gestaltet werden.

In einer besonders vorteilhaften Ausgestaltung der Erfindung findet zwischen der dritten Dampftrommel und der ersten Dampftrommel eine weitere Wasser-Dampf-Trennung statt. Durch weitere Eindickung (Konzentrierung) kann der Abschlämmstrom reduziert werden. Des Weiteren können ebenfalls die Menge von zu entsorgendem Abschlämmwasser sowie der Verbrauch von zuzuführendem Deionat geringer gehalten werden.

Bei der weiteren Wasser-Dampf-Trennung abgetrennter Dampf wird vorteilhafterweise der ersten Dampftrommel zugeführt. Dies ermöglicht eine weiter verbesserte Energieausnutzung.

Bei der weiteren Wasser-Dampf-Trennung abgetrenntes, verunreinigtes Wasser wird der ersten Wasser-Dampf-Trennung zugeführt. Das abgetrennte, verunreinigte Wasser kann daher einer zweimaligen Wasser-Dampf-Trennung unterzogen werden, wodurch mehr Energie verwertet werden kann.

Besonders vorteilhaft findet die Wasser-Dampf-Trennung in einem Abscheiderbehälter statt. Dies ermöglicht auf besonders einfache und kostengünstige Weise die Trennung von Wasser und Dampf.

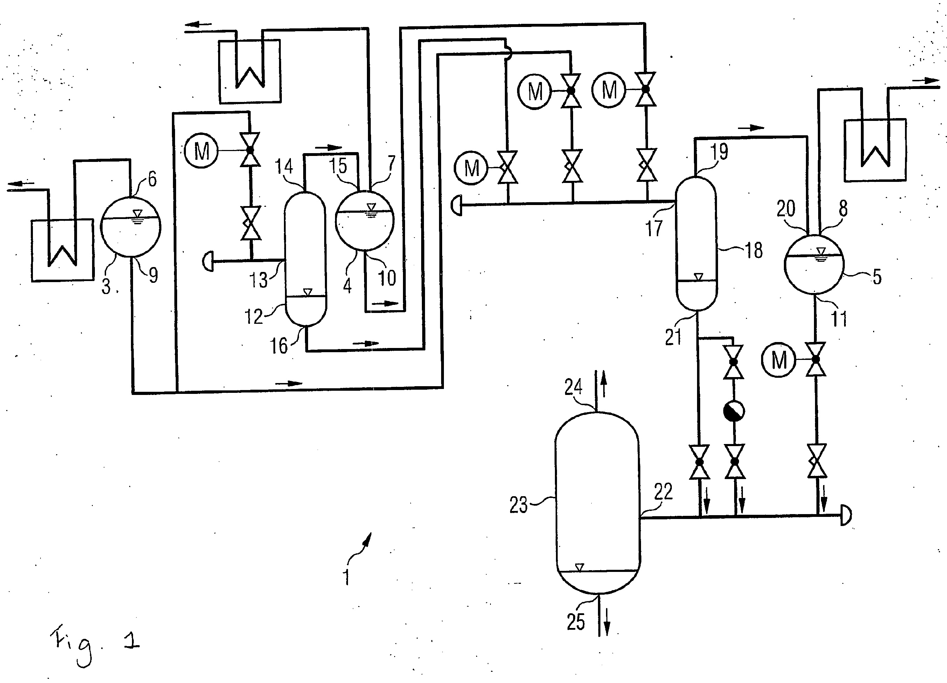

Nachfolgend wird ein Ausführungsbeispiel der Erfindung anhand der beigefügten schematischen Zeichnung näher erläutert. Es zeigt:
- Die Figur: ein Ausführungsbeispiel einer erfindungsgemäßen Vorrichtung zur Behandlung von verunreinigtem Wasser in einer Dampfkraftanlage.

In der Figur ist eine erfindungsgemäße Vorrichtung in Gestalt einer Reinigungsvorrichtung 1 dargestellt, die Teil einer Dampfkraftanlage zur Stromerzeugung ist. Zur Vereinfachung der Darstellung sind von der Dampfkraftanlage insbesondere Abschlämmwege gezeigt, die zum Abtransportieren von Abschlämmwasser dienen, das beim Abschlämmen von Dampftrommeln der Dampfkraftanlage anfällt.

Innerhalb der Dampfkraftanlage ist eine Hochdruck (HD)-Dampftrommel 3 mit einem HD-Druckniveau, eine Mitteldruck (MD)-Dampftrommel 4 mit einem MD-Druckniveau, das niedriger liegt, als das HD-Druckniveau, und eine Niederdruck (ND)-Drucktrommel 5 mit einem ND-Druckniveau, das niedriger liegt, als das MD-Druckniveau, vorgesehen. Mit den Dampftrommeln 3, 4, 5 wird im Betrieb der Dampfkraftanlage aus in den Dampftrommeln 3, 4, 5 enthaltenem Wasser, in jeweils einem (nicht dargestellten) Verdampfer, Dampf erzeugt. Dieser Dampf wird über den Dampftrommeln 3, 4, 5 zugeordnete Überhitzer einer oder mehreren Turbinen der Dampfkraftanlage 2 zugeführt. Die Dampftrommeln 3, 4, 5 besitzen daher jeweils einen oberen Ausgang 6, 7 bzw. 8, an denen der Dampf der verschiedenen Druckniveaus austreten kann.

Zum Reinigen werden die Dampftrommeln 3, 4, 5 abgeschlämmt. Dazu haben sie jeweils einen unteren Ausgang 9, 10 bzw. 11, an denen das aufkonzentrierte, verunreinigte Wasser aus den Dampftrommeln 3, 4 bzw. 5 teilweise abgeschlämmt wird. Die Dampftrommeln 3, 4, 5 sind über die oben erwähnten Abschlämmleitungen miteinander verbunden.

Um einerseits zu verhindern, dass abgeschlämmte Verunreinigungen im Abschlämmweg von der einen Dampftrommel zu der nächsten mittransportiert werden, und um andererseits zu gewährleisten, dass in dem abgeschlämmten Wasser noch enthaltene Energie weitgehend genutzt wird, wird das Abschlämmwasser einer Wasser-Dampf-Trennung unterzogen. Dazu ist in dem Abschlämmweg von der HD-Dampftrommel 3 zu der MD-Dampftrommel 4 ein Trennmittel in Gestalt einer Mitteldruck-Abscheiderflasche 12 angeordnet, die eine Wasser-Dampf-Trennung im MD-Druckniveau ermöglicht. Die Mitteldruck-Abscheiderflasche 12 hat einen Eingang 13, der mit dem unteren Ausgang 9 der HD-Dampftrommel 3 über eine Abschlämmleitung verbunden ist. Über diese Abschlämmleitung kann Abschlämmwasser aus der HD-Dampftrommel in die Mitteldruck-Abscheiderflasche 12 geleitet werden. In der Mitteldruck-Abscheiderflasche 12 kann das Abschlämmwasser entsprechend des MD-Druckniveaus ausdampfen. Die Mitteldruck-Abscheiderflasche 12 hat einen oberen Ausgang 14, der mit einem Eingang 15 der MD-Dampftrommel 4 verbunden ist. Über diese Verbindung kann der in der Mitteldruck-Abscheider-flasche 12 abgetrennte Dampf zur Weiterverwertung in die MD-Dampftrommel 4 geleitet werden.

Die Mitteldruck-Abscheiderflasche 12 hat weiterhin einen unteren Ausgang 16, der über eine Abschlämmleitung und ein Ventil mit einem Eingang 17 eines Trennmittels in Form einer Niederdruck-Abscheiderflasche 18 verbunden ist, die eine Wasser-Dampf-Trennung im ND-Druckniveau ermöglicht. Über diesen unteren Ausgang 16 kann abgetrenntes, verunreinigtes Wasser in die Niederdruck-Abscheiderflasche 18 geleitet werden, um dieses Wasser dort der ND-Wasser-Dampf-Trennung zu unterziehen. Der untere Ausgang der MD-Dampftrommel 4 ist ebenfalls über eine Abschlämmleitung und ein Ventil mit dem Eingang 17 der Niederdruck-Abscheiderflasche 18 verbunden, um abgeschlämmtes Wasser einzuleiten. In der Niederdruck-Abscheiderflasche 18 kann das zugeführte Abschlämmwasser entsprechend dem ND-Druckniveau ausdampfen.

Die Niederdruck-Abscheiderflasche 18 hat einen oberen Ausgang 19, der zum Einleiten von abgetrenntem Dampf mit einem Eingang 20 der ND-Dampftrommel 5 verbunden ist. Die Niederdruck-Abscheiderflasche 18 hat des Weiteren einen unteren Ausgang 21, der mittels einer Abschlämmleitung und eines Ventiles zum Einleiten des abgetrennten, verunreinigten Wassers mit einem Eingang 22 eines Sammeltanks 23 verbunden ist. Der Eingang 22 des Sammeltanks 23 ist darüber hinaus über eine Abschlämmleitung mit dem unteren Ausgang 11 der ND-Dampftrommel verbunden, um aus der ND-Dampftrommel abgeschlämmtes Wasser dem Sammeltank 23 zuzuführen. Der Sammeltank 23 sammelt das verunreinigte und nicht weiter genutzte, abgetrennte Abschlämmwasser und entspannt es dort. Der Sammeltank 23 hat einen oberen Ausgang 24, an dem Dampf entweder zur Atmosphäre oder zu einem (nicht dargestellten) Kondensator abgeführt wird, und einen unteren Ausgang 25, an dem das verbleibende Abwasser-Kondensat mit den weiter aufkonzentrierten Verunreinigungen aus dem Kreislauf entsorgt oder wiederaufbereitet wird.

Im obigen Ausführungsbeispiel wurden vorteilhafterweise zwei Abscheiderflaschen 12 und 18 eingesetzt. Es ist ebenfalls möglich, nur eine oder mehrere dieser Abscheiderflaschen vorzusehen. In dem Fall, in dem nur die Niederdruck-Abschneiderflasche 18 vorgesehen ist, ist der Ausgang 9 der HD-Dampftrommel 3 direkt mit dem Eingang 17 der Niederdruck-Abscheiderflasche 18 verbunden, um abgeschlämmtes Wasser einzuleiten.

## Patentansprüche

1. Verfahren zur Behandlung von verunreinigtem Wasser bei einer Dampfkraftanlage, bei dem
zwischen einer ersten Dampftrommel (4) eines ersten Druckniveaus und einer zweiten Dampftrommel (5) eines niedrigeren zweiten Druckniveaus eine Wasser-Dampf-Trennung statt findet, **dadurch gekennzeichnet, dass** die Wasser-Dampf-Trennung in einem Abscheiderbehälter (12, 18) statt findet, wobei abgetrennter Dampf der zweiten Dampftrommel (5) zugeführt wird.

2. Verfahren nach Anspruch 1,
**dadurch gekennzeichnet, dass**
dabei abgetrenntes verunreinigtes Wasser einem Sammeltank (23) zugeführt wird.

3. Verfahren nach einem der vorhergehenden Ansprüche,
**dadurch gekennzeichnet, dass**
zwischen einer dritten-Dampftrommel (3) eines dritten Druckniveaus, das höher ist, als das erste Druckniveau, und der zweiten Dampftrommel (5) eine Wasser-Dampf-Trennung statt findet.

4. Verfahren nach Anspruch 3,
**dadurch gekennzeichnet, dass**
zwischen der dritten Dampftrommel (3) und der ersten Dampftrommel (4) eine Wasser-Dampf-Trennung statt findet.

5. Verfahren nach Anspruch 4,
**dadurch gekennzeichnet, dass**
zwischen der dritten Dampftrommel (3) und der ersten Dampftrommel (4) abgetrennter Dampf der ersten Dampftrommel (4) zugeführt wird.

6. Verfahren nach Anspruch 4 oder 5,
**dadurch gekennzeichnet, dass**
zwischen der dritten Dampftrommel (3) und der ersten Dampftrommel (4) abgetrenntes, verunreinigtes Wasser der ersten Wasser-Dampf-Trennung zugeführt wird.

7. Vorrichtung (1) zur Behandlung von verunreinigtem Wasser bei einer Dampfkraftanlage,
**dadurch gekennzeichnet, dass**
die Vorrichtung (1) eine erste Dampftrommel (4) eines ersten Druckniveaus und eine zweite Dampftrommel (5) eines niedrigeren zweiten Druckniveaus aufweist, die miteinander verbunden sind, und zwischen der ersten Dampftrommel (4) und der zweiten Dampftrommel (5) ein erstes Trennmittel (18) zur Wasser-Dampf-Trennung angeordnet ist.

8. Vorrichtung nach Anspruch 7,
**dadurch gekennzeichnet, dass**
das erste Trennmittel (18) mit einem Sammeltank (23) zum Zuführen von abgetrenntem, verunreinigtem Wasser verbunden ist.

9. Vorrichtung nach Anspruch 7 oder 8,
**dadurch gekennzeichnet, dass**
das erste Trennmittel (18) mit der zweiten Dampftrommel (5) zum Zuführen von abgetrenntem Dampf verbunden ist.

10. Vorrichtung nach einem der Ansprüche 7-9,
**dadurch gekennzeichnet, dass**
eine dritte Dampftrommel (3) eines dritten Druckniveaus vorhanden ist, das höher ist, als das erste Druckniveau, und die dritte Dampftrommel (3) mit dem ersten Trennmittel (18) zur Wasser-Dampf-Trennung verbunden ist.

11. Vorrichtung nach Anspruch 10,
**dadurch gekennzeichnet, dass**
zwischen der dritten Dampftrommel (3) und der ersten Dampftrommel (4) ein zweites Trennmittel (12) für eine weitere Wasser-Dampf-Trennung angeordnet ist.

12. Vorrichtung nach Anspruch 11,
**dadurch gekennzeichnet, dass**
das zweite Trennmittel (12) mit der ersten Dampftrommel (4) zum Zuführen von abgetrenntem Dampf verbunden ist.

13. Vorrichtung nach Anspruch 11 oder 12,
**dadurch gekennzeichnet, dass**
das zweite Trennmittel (12) mit dem ersten Trennmittel (18) zum Zuführen von bei der weiteren Wasser-Dampf-Trennung abgetrenntem, verunreinigtem Wasser verbunden ist.

14. Vorrichtung nach einem der Ansprüche 7 bis 13,
**dadurch gekennzeichnet, dass**
das erste Trennmittel (18) und/oder das zweite Trennmittel (12) ein Abscheiderbehälter ist.

15. Dampfkraftanlage mit einer Vorrichtung nach einem der Ansprüche 7 bis 14.

## Claims

1. Method for treating contaminated water in a steam power plant, wherein
a water/steam separation operation takes place between a first steam drum (4) of a first pressure level and a second steam drum (5) of a lower second pressure level, **characterised in that** the water/steam separation operation takes place in a separator (12, 18), with separated steam being fed to the second steam drum (5).

2. Method according to claim 1,
**characterised in that**
contaminated water separated thereby is fed to a collection tank (23).

3. Method according to one of the preceding claims,
**characterised in that**
a water/steam separation operation takes place between a third steam drum (3) of a third pressure level, which is higher than the first pressure level, and the second steam drum (5).

4. Method according to claim 3,
**characterised in that**
a water/steam separation operation takes place between the third steam drum (3) and the first steam drum (4).

5. Method according to claim 4,
**characterised in that**
steam separated between the third steam drum (3) and the first steam drum (4) is fed to the first steam drum (4).

6. Method according to claim 4 or 5,
**characterised in that**
contaminated water separated between the third steam drum (3) and the first steam drum (4) is fed into the first water/steam separation operation.

7. Device (1) for treating contaminated water in a steam power plant,
**characterised in that**
the device (1) has a first steam drum (4) of a first pressure level and a second steam drum (5) of a lower second pressure level, which are connected together, and a first separating means (18) for the water/steam separation operation is disposed between the first steam drum (4) and the second steam drum (5).

8. Device according to claim 7,
**characterised in that**
the first separating means (18) is connected to a collection tank (23) to feed in separated contaminated water.

9. Device according to claim 7 or 8,
**characterised in that**
the first separating means (18) is connected to the second steam drum (5) to feed in separated steam.

10. Device according to one of claims 7-9,
**characterised in that**
a third steam drum (3) is present of a third pressure level, which is higher than the first pressure level, and the third steam drum (3) is connected to the first separating means (18) for the water/steam separation operation.

11. Device according to claim 10,
**characterised in that**
a second separating means (12) for a further water/steam separation operation is disposed between the third steam drum (3) and the first steam drum (4).

12. Device according to claim 11,
**characterised in that**
the second separating means (12) is connected to the first steam drum (4) to feed in separated steam.

13. Device according to claim 11 or 12,
**characterised in that**
the second separating means (12) is connected to the first separating means (18) to feed in contaminated water separated during the further water/steam separation operation.

14. Device according to one of claims 7 to 13,
**characterised in that**
the first separating means (18) and/or the second separating means (12) is a separator.

15. Steam power plant with a device according to one of claims 7 to 14.

## Revendications

1. Procédé pour traiter de l'eau polluée dans une centrale à vapeur, dans lequel une séparation eau-vapeur a lieu entre un premier ballon à vapeur (4) à un premier niveau de pression et un deuxième ballon à vapeur (5) à un deuxième niveau de pression plus bas, **caractérisé en ce que** la séparation eau-vapeur a lieu dans un récipient de décantation (12, 18), la vapeur séparée étant envoyée au deuxième ballon à vapeur (5).

2. Procédé selon la revendication 1, **caractérisé en ce que** l'eau polluée séparée est envoyée à une cuve de collecte (23).

3. Procédé selon l'une des revendications précédentes, **caractérisé en ce qu'**une séparation eau-vapeur a lieu entre un troisième ballon à vapeur (3) à un troisième niveau de pression supérieur au premier niveau de pression et le deuxième ballon à vapeur (5).

4. Procédé selon la revendication 3, **caractérisé en ce qu'**une séparation eau-vapeur a lieu entre le troisième ballon à vapeur (3) et le premier ballon à vapeur (4).

5. Procédé selon la revendication 4, **caractérisé en ce que** la vapeur séparée entre le troisième ballon à vapeur (3) et le premier ballon à vapeur (4) est envoyée au premier ballon à vapeur (4).

6. Procédé selon la revendication 4 ou 5, **caractérisé en ce que** l'eau polluée séparée entre le troisième ballon à vapeur (3) et le premier ballon à vapeur (4) est envoyée à la première séparation eau-vapeur.

7. Dispositif (1) pour traiter de l'eau polluée dans une centrale à vapeur, **caractérisé en ce que** le dispositif (1) comporte un premier ballon à vapeur (4) à un premier niveau de pression et un deuxième ballon à vapeur (5) à un deuxième niveau de pression plus bas, ces deux ballons à vapeur communiquant l'un avec l'autre, et un premier moyen de séparation (18) destiné à la séparation eau-vapeur est placé entre le premier ballon à vapeur (4) et le deuxième ballon à vapeur (5).

8. Dispositif selon la revendication 7, **caractérisé en ce que** le premier moyen de séparation (18) communique avec une cuve de collecte (23) pour envoyer de l'eau polluée séparée.

9. Dispositif selon la revendication 7 ou 8, **caractérisé en ce que** le premier moyen de séparation (18) communique avec le deuxième ballon à vapeur (5) pour envoyer de la vapeur séparée.

10. Dispositif selon l'une des revendications 7 à 9, **caractérisé en ce qu'**il y a un troisième ballon à vapeur (3) à un troisième niveau de pression supérieur au premier niveau de pression et le troisième ballon à vapeur (3) communique avec le premier moyen de séparation (18) destiné à la séparation eau-vapeur.

11. Dispositif selon la revendication 10, **caractérisé en ce qu'**un deuxième moyen de séparation (12) destiné à une séparation supplémentaire eau-vapeur est placé entre le troisième ballon à vapeur (3) et le premier ballon à vapeur (4).

12. Dispositif selon la revendication 11, **caractérisé en ce que** le deuxième moyen de séparation (12) est relié au premier ballon à vapeur (4) pour envoyer de la vapeur séparée.

13. Dispositif selon la revendication 11 ou 12, **caractérisé en ce que** le deuxième moyen de séparation (12) communique avec le premier moyen de séparation (18) pour envoyer de l'eau polluée séparée lors de la séparation supplémentaire eau-vapeur.

14. Dispositif selon l'une des revendications 7 à 13, **caractérisé en ce que** le premier moyen de séparation (18) et/ou le deuxième moyen de séparation (12) est un récipient de décantation.

15. Centrale à vapeur comportant un dispositif suivant l'une des revendications 7 à 14.
